# EUROPÄISCHE PATENTSCHRIFT

(11) **EP 3 715 168 B1**
(45) Veröffentlichungstag und Bekanntmachung des Hinweises auf die Patenterteilung: **07.06.2023**
(21) Anmeldenummer: 20154399.8
(22) Anmeldetag: 29.01.2020
(51) Int. Cl.: B60L 5/04, B60L 5/36, B60L 53/12

(54) **STROMABNEHMER-ANORDNUNG FÜR DOPPELPOLIGE FAHRDRÄHTE**
CURRENT COLLECTOR ASSEMBLY FOR DOUBLE POLE CONTACT WIRES
AGENCEMENT DE COLLECTEUR DE COURANT POUR FILS DE CONTACT À DOUBLE PÔLE

(30) Priorität: 28.03.2019 DE 102019108025; 21.08.2019 DE 102019122471
(43) Veröffentlichungstag der Anmeldung: 30.09.2020
(73) Patentinhaber: Deutzer Technische Kohle GmbH, 15738 Zeuthen (DE)
(72) Erfinder: Deutzer, Manfred, 15738 Zeuthen (DE)
(74) Vertreter: Weisse, Renate

(56) Entgegenhaltungen:
- DE-A1-102010 053 528
- DE-A1-102013 019 534
- DE-C1- 3 244 945

## Beschreibung

### Technisches Gebiet

Die Erfindung betrifft eine Stromabnehmer-Anordnung für doppelpolige Fahrdrähte von fahrdrahtgespeisten Fahrzeugen, die auch unabhängig vom Fahrdrahtsystem fahren können, enthaltend ein zentrierendes, steifes Abstandselement mit zwei Schenkeln, die an den Innenseiten Gleitflächen besitzen, die zu einer nach oben offenen Führungsrille verlaufen, in welche eine Führung während des Fahrbetriebs einfädelbar ist. Ein solches zentrierendes Abstandselement kann beispielsweise V-förmig mit zwei Schenkeln ausgebildet sein, die Gleitflächen besitzen, die zu einer im Scheitel befindlichen, nach oben offenen Führungsrille verlaufen.

Die Erfindung betrifft ferner ein elektrisch angetriebenes, fahrdrahtgespeistes Fahrzeug, das auch unabhängig vom Fahrdrahtsystem fahren kann, enthaltend einen Speicher für elektrische Energie und eine solche Stromabnehmer-Anordnung.

Die Erfindung betrifft weiterhin ein Beförderungssystem zur Beförderung von Personen und/oder Gütern entlang wenigstens eines Beförderungsweges; enthaltend ein Fahrdrahtsystem, welches sich zumindest über eine Teilstrecke des Beförderungsweges erstreckt, mit zwei Fahrdrähten und einem Eindrahtbereich mit einer sich in Beförderungsrichtung erstreckenden, draht- oder stangengenförmigen Führung und ein solches Fahrzeug.

Fahrdrahtgespeiste Fahrzeuge sind beispielsweise Oberleitungsbusse, auch als O-Bus oder Trolleybus bezeichnet. Es gibt aber auch andere fahrdrahtgespeiste Fahrzeuge, etwa zur Beförderung von Gütern.

Die Fahrzeuge haben einen Elektromotor und werden mit Strom aus einer Oberleitung gespeist. Die Oberleitung ist über der Fahrbahn gespannt und zweipolig ausgeführt. Die Oberleitungsbusse sind spurgebunden, aber nicht spurgeführt.

Die elektrische Energie wird über Stromabnehmer vom Fahrdraht zum Elektromotor geleitet. Da die Fahrzeuge nicht schienengebunden sind, sind immer zwei Fahrdrähte für die Versorgung mit elektrischer Energie erforderlich. Typischerweise sind die Stromabnehmer stangenförmig ausgebildet. Am oberen Ende der Stange ist jeweils ein Stromabnehmerkopf, auch als Stromabnehmerschuh, Schleifschuh oder Gleitschuh bezeichnet, befestigt.

Als Stromabnehmer-Anordnung wird hier eine Anordnung mit einem Stromabnehmer und weiteren Komponenten, etwa Befestigungselementen, Gelenken, Gleitschuhen und dergleichen bezeichnet. Die Stromabnehmer sind an die Oberseite des Fahrzeugs angelenkt und flexibel ausgebildet. Dadurch wird ein guter Kontakt auch dann gewährleistet, wenn der Abstand zwischen Fahrbahndecke und Fahrdraht variiert oder die Fahrspur des Fahrzeugs von der Spur des Fahrdrahts abweicht. Dies ist insbesondere dann erforderlich, wenn sich Hindernisse auf der Fahrspur befinden oder eine Haltestelle angefahren werden soll.

### Stand der Technik

Aufbau und Funktionsweise von fahrdrahtgespeisten Fahrzeugen sind auf der Webseite https://de.wikipedia.org/wiki/Oberleitungsbus am 26. März 2019 ausführlich beschrieben. Nachteilig bei den aus der Praxis bekannten, fahrdrahtgespeisten Fahrzeugen ist es, dass die Fahrzeuge nur im Bereich der Fahrdrähte fahren können. Umleitungen, verkürzter Nachtverkehr oder kurzfristige Linienänderungen sind daher nur bei Strecken möglich, die ebenfalls Fahrdrähte aufweisen. Zudem ist es aufwändig und teuer, entfernte Orte mit wenig Fahrgastaufkommen in das Streckennetz zu integrieren.

Es ist bekannt fahrdrahtgespeiste Fahrzeuge mit einem wiederaufladbaren Akkumulator zu versehen. Der Akkumulator kann über den Fahrdraht geladen werden. Mit solchen Fahrzeugen können auch Strecken ohne Fahrdraht befahren werden. Dann müssen die Stromabnehmer am Übergang ein- bzw. abgedrahtet werden. Hierzu steigt der Fahrzeugführer oder die Fahrzeugführerin aus und führt das Eindrahten (auch als Andrahten bezeichnet) oder Abdrahten von Hand durch. Das ist aufwändig.

DE 10 2013 019 534 A1 und DE 10 2014 014 200 A1 offenbaren eine Eindrahtungsvorrichtung für fahrdrahtgebundene Fahrzeuge. Die Fahrdrähte werden in einem Eindrahtbereich mit einem Führungsdraht oder einer Führungsstange ergänzt. Diese Führung verläuft zunächst mittig etwas unterhalb der Ebene der Fahrdrähte. Am Ende des Eindrahtbereichs verläuft die Führung nach oben bis in die Ebene der Fahrdrähte. Eine nach oben offene, V-förmige Traverse ist am oberen Ende eines Einstangen-Stromabnehmers vorgesehen. Die V-förmige Traverse bildet ein Abstandselement. Am Ende der Schenkel der Traverse sind jeweils Stromschuhe befestigt. Wenn der Einstangen-Stromabnehmer zum Eindrahten nach oben bewegt wird, führt die Führung die Traverse zunächst in eine laterale Position, bei der die Stromschuhe genau unterhalb der Fahrdrähte positioniert sind. Entsprechend dem Verlauf der Führung werden die Stromschuhe mit der Bewegung des Fahrzeugs entlang des Eindrahtbereichs nach oben geführt und in die Fahrdrähte eingedrahtet. Die Vorrichtung ermöglicht das Eindrahten während der Fahrt. Zusammen mit leistungsfähigeren Akkumulatoren kann das Fahrzeug nun auch auf Strecken ohne Fahrdraht eingesetzt werden. Die Aufladung der Akkumulatoren kann durch Rekuperation und/oder über Energieversorgung aus den Fahrdrähten erfolgen. Eine solche Aufladung ist mit geringerer Ladeleistung verbunden und somit schonender als das Aufladen mit hoher Leistung. Dabei spielt die Ladezeit keine Rolle, denn das Fahrzeug ist auch während des Ladevorgangs in Betrieb.

Nachteilig bei der bekannten Eindrahtungsvorrichtung ist es, dass die Vorrichtung nur an neuen Fahrzeugen eingesetzt werden kann, da bekannte Fahrzeuge mit zwei und nicht mit einer Stange ausgestattet sind.

### Offenbarung der Erfindung

Es ist Aufgabe der Erfindung, eine Stromabnehmer-Anordnung der eingangs genannten Art zu schaffen, bei dem die bisherige Fahrzeugkonstruktion nicht verändert werden muss und das Nach- oder Umrüsten von bekannten Fahrzeugen vereinfacht.

Erfindungsgemäß wird die Aufgabe gelöst durch:
(b) zwei gelenkig an einem Fahrzeug befestigbare Stromabnehmerstangen;
(c) eine Verriegelung zum Befestigen des Abstandselements an den Stromabnehmerstangen, und
(d) eine Steuerung zum Steuern der Verriegelung, derart, dass das Abstandselement an beiden Stromabnehmerstangen zum Eindrahten befestigt und nach dem Eindrahten von wenigstens einer Stromabnehmerstange gelöst ist.

Anders als bei der bekannten Anordnung sind zwei Stromabnehmerstangen vorgesehen. Diese sind nur während des Eindrahtvorgangs über das Abstandselement fest miteinander verbunden. Danach sind die gelenkig befestigten Stromabnehmerstangen unabhängig voneinander beweglich. Dies ist besonders bei veränderlichem Abstand zwischen den Fahrdrähten oder unterschiedlichen Höhen vorteilhaft. Mit der Steuerung kann die Verriegelung automatisch gelöst werden. Ein manueller Einsatz des Fahrpersonals ist nicht erforderlich. Das Eindrahten kann ohne jeden Halt während der Fahrt erfolgen.

Bei einer bevorzugten Ausgestaltung der Erfindung ist vorgesehen, dass jede der Stromabnehmerstangen einen Stromabnehmerkopf umfasst, an welchem das Abstandselement befestigbar ist. Das Abstandselement wird also am freien Ende der Stange und nicht im stabförmigen Bereich befestigt. Das erleichtert die Nachrüstung von bestehenden Stromabnehmerstangen, denn dann braucht nur der Stromabnehmerkopf der Stromabnehmerstange ausgetauscht oder modifiziert werden.

Eine besonders vorteilhafte Ausgestaltung der Erfindung sieht vor, dass der Stromabnehmerkopf ein Gelenk aufweist, welche eine Rotation des Abstandselements gegenüber dem Stromabnehmerkopf um eine Achse erlaubt, die im eingedrahteten Zustand senkrecht verläuft. Bei dieser Ausgestaltung können auch die verbundenen Stromabnehmerstangen eine seitliche Bewegung ausführen. Eindrahten wird somit auch dann möglich, wenn das Fahrzeug nicht genau unterhalb der Fahrdrähte fährt. Die an dem Stromabnehmerkopf vorgesehenen Stromschuhhalter werden immer in Längsrichtung des Busses und somit in Längsrichtung der Fahrdrähte ausgerichtet.

Das Abstandselement kann an einer der Stromabnehmerstangen befestigt sein und lediglich an der anderen lösbar verriegelt werden. Vorzugsweise ist aber vorgesehen, dass das Abstandselement über einen Verbindungskörper mit dem Fahrzeug verbunden ist. Der Verbindungskörper kann insbesondere von einer Stange gebildet sein, welche gelenkig mit dem Fahrzeug verbindbar ist. Dies ermöglicht es, dass das Abstandselement und der Verbindungskörper zum Eindrahten nach oben und nach dem Eindrahten wieder zurück in eine Ruheposition bewegt wird. Dann wird der Luftwiderstand nicht unnötig erhöht. Zum Bewegen kann beispielsweise eine Stromabnehmerhauptfeder, ein Motor mit entsprechenden Übertragungselementen zur Kraftübertragung, eine Hydraulik oder eine Pneumatik verwendet werden.

Eine besonders vorteilhafte Ausgestaltung der Erfindung sieht pneumatische oder hydraulische Antriebe vor, welche einen Schenkel des Abstandselements mit dem Verbindungskörper verbinden. Dadurch kann das Abstandselement in lateraler Richtung seitlich bewegt werden. Vorteilhafterweise ist die Verbindung des Abstandselements mit dem Verbindungskörper nicht starr, sondern beweglich ausgebildet. Das erlaubt eine seitliche Bewegung. Vorteilhafterweise ist die Verbindung derart ausgebildet, dass eine Rotation um eine horizontale Achse in Bewegungsrichtung des Fahrzeugs und eine Längsbewegung des Abstandselements gegenüber dem Verbindungskörper in vertikaler Richtung ermöglicht wird. Das beispielsweise V-förmige Abstandselement bleibt dann bei einer seitlichen Bewegung mit seiner offenen Seite weiterhin nach oben ausgerichtet.

Bei einer Ausgestaltung der Erfindung ist vorgesehen, dass die Verbindung des Verbindungskörpers mit dem Fahrzeug quer zur Längsrichtung des Fahrdrahtes verstellbar oder um eine vertikale Achse drehbar ausgebildet ist. Dies erlaubt eine Nachjustierung des Verbindungskörpers, wenn das Fahrzeug im Eindrahtbereich zu weit von seiner vorgesehenen Fahrspur abweicht. Die Nachjustierung kann mit audiovisueller Kontrolle durch den Fahrer oder sensorgesteuert automatisiert erfolgen. Insbesondere kann ein Antrieb zum Bewegen des Abstandselements relativ zum Fahrzeug vorgesehen sein. Der Antrieb kann dabei von einer Feder, einem Motor, einer Hydraulik oder einer Pneumatik gebildet sein.

Bei einer besonders bevorzugten Ausgestaltung der Erfindung ist ein Sensor zum Erfassen eines Eindrahtbereichs oder eines Fahrzeugs im Eindrahtbereich vorgesehen. Mit dem Sensor wird ein Signal für den Fahrzeugführer und/oder eine Fahrzeugsteuerung erzeugt, welches den nahenden Eindrahtbereich ankündigt. Der Sensor kann am Fahrzeug vorgesehen sein. Eine besonders einfache Variante sieht aber einen Sensor im Fahrdraht vor. Das von dem Sensor erzeugte Signal kann drahtlos übertragen werden oder über den Stromabnehmer übertragen werden. Wenn der Sensor ein Signal sendet, dass und ggf. wann und/oder wo der Eindrahtbereich beginnt, werden die Stromabnehmerstangen und der daran verriegelte Verbindungskörper nach oben bewegt. Am Ende des Eindrahtbereichs wird die Verriegelung gelöst und der Verbindungskörper zurück in eine Ruheposition bewegt. Die Steuerung der Verriegelung kann drahtlos erfolgen. Es ist aber auch möglich, eine geeignete Mechanik vorzusehen, welche beispielsweise durch Zusammenwirken mit der Führung ein Entriegeln bewirkt.

Bei einer weiteren Ausgestaltung der Erfindung ist ein Signalgeber zum Anzeigen eines Eindrahtbereichs vorgesehen. Der Signalgeber kann optisch und/oder akustisch ausgebildet sein. Der Signalgeber erzeugt ein Signal, mit dem der Fahrzeugführer auf den Eindrahtbereich aufmerksam gemacht wird. Der Fahrzeugführer kann sein Fahrverhalten dann entsprechend anpassen. Dies kann eine Anpassung des Fahrtweges, aber auch eine angepasste Geschwindigkeit sein.

Bei einer besonders vorteilhaften Ausgestaltung der Erfindung ist vorgesehen, dass das Abstandselement von einer Eindrahtposition in eine Ruheposition bewegbar ist und Verriegelungsmittel zum Verriegeln des Abstandselements in der Ruheposition vorgesehen sind. Ein an einer Stange oder einem anderen Verbindungskörper befestigtes Abstandselement kann beispielsweise zurück zum Fahrzeug bewegt werden. Dort kann es in einer Halterung verriegelt werden, bis es für einen weiteren Eindrahtvorgang benötigt wird. Die Ruheposition ist vorzugsweise so gewählt, dass sie für Unbefugte nicht erreichbar ist, der Luftwiderstand möglichst gering gehalten wird und der Fahrbetrieb nicht gestört wird. Eine bevorzugte Ruheposition ist liegend auf der Oberseite des Fahrzeugs. Bei herkömmlichen Fahrzeugen ist ein Stromabnehmerkopf mit einer Schleifstückhalterung an jeder Stromabnehmerstange vorgesehen. Dann ist die übertragbare Energie begrenzt. Für eine höhere Energieübertragung kann es sinnvoll sein, dass jede Stromabnehmerstange zwei oder sogar mehr Schleifstückhalterungen aufweist, welche in Längsrichtung des Fahrdrahtes hintereinander angeordnet sind. Die Schleifstückhalterungen sind starr, jedoch drehbar miteinander verbunden und erlauben eine höhere Energieübertragung. Dann können größere Akkumulatoren aufgeladen werden und höhere Reichweiten ohne Fahrdraht erreicht werden.

Bei einer Ausgestaltung der Erfindung ist vorgesehen, dass die Steuerung vom Fahrzeugführer oder von der Fahrzeugführerin betätigbar ist oder von den Signalen eines Sensors beaufschlagt ist, welcher einen Eindrahtbereich erfasst. Der immer im Fahrbetrieb erfolgende Eindrahtvorgang wird also entweder manuell ausgelöst oder aufgrund eines Sensorsignals.

Die erfindungsgemäße Anordnung kann zum Um- oder Nachrüsten bestehender Fahrzeugflotten verwendet werden. Es können aber auch neue Fahrzeuge gefertigt werden, die elektrisch angetrieben und fahrdrahtgespeist sind, wobei das Fahrzeug, das auch unabhängig vom Fahrdrahtsystem fahren kann, enthält
(a) einen Speicher für elektrische Energie,
(b) eine Stromabnehmer-Anordnung für doppelpolige Fahrdrähte, und
(c) ein zentrierendes, steifes Abstandselement mit zwei Schenkeln, die an den Innenseiten Gleitflächen besitzen, die zu einer nach oben offenen Führungsrille verlaufen, in welche eine Führung während des Fahrbetriebs einfädelbar ist,
**gekennzeichnet durch**
(d) zwei an dem Fahrzeug gelenkig befestigte Stromabnehmerstangen;
(e) eine Verriegelung zum Befestigen des Abstandselements an den Stromabnehmerstangen, und
(f) eine Steuerung zum Steuern der Verriegelung, derart, dass das Abstandselement an beiden Stromabnehmerstangen zum Eindrahten befestigt und nach dem Eindrahten von wenigstens einer Stromabnehmerstange gelöst ist.

Die Fahrzeuge können in einem Beförderungssystem zur Beförderung von Personen und/oder Gütern entlang wenigstens eines Beförderungsweges verwendet werden, die enthalten:
(a) ein Fahrdrahtsystem, welches sich zumindest über eine Teilstrecke des Beförderungsweges erstreckt, mit zwei Fahrdrähten und einem Eindrahtbereich mit einer sich in Beförderungsrichtung erstreckenden, draht- oder stangengenförmigen Führung;
(b) wenigstens ein oben beschriebenes, elektrisch angetriebenes, fahrdrahtgespeistes Fahrzeug, das auch unabhängig vom Fahrdrahtsystem fahren kann.

Ausgestaltungen der Erfindung sind Gegenstand der Unteransprüche. Ein Ausführungsbeispiel ist nachstehend unter Bezugnahme auf die beigefügten Zeichnungen näher erläutert.

### Definitionen

In dieser Beschreibung und in den beigefügten Ansprüchen haben alle Begriffe eine dem Fachmann geläufige Bedeutung, welche der Fachliteratur, Normen und den einschlägigen Internetseiten und Publikationen, insbesondere lexikalischer Art, beispielsweise www.Wikipedia.de, www.wissen.de oder www.techniklexikon.net, der Wettbewerber, forschenden Institute, Universitäten und Verbände, beispielsweise Verein Deutscher Ingenieure, dargelegt sind. Insbesondere haben die verwendeten Begriffe nicht die gegenteilige Bedeutung dessen, was der Fachmann den obigen Publikationen entnimmt.

### Kurze Beschreibung der Zeichnung

- Fig. 1: ist eine schematische Darstellung eines Eindrahtbereichs mit einem Fahrzeug, welches während der Fahrt eindrahtbar ist, entsprechend einem ersten Ausführungsbeispiel, bei dem ein Abstandselement im stabförmigen, mittleren Bereich an den Stangen verriegelbar ist.
- Fig. 2: ist eine schematische Darstellung eines Eindrahtbereichs mit einem Fahrzeug, welches während der Fahrt eindrahtbar ist, entsprechend einem zweiten Ausführungsbeispiel, bei dem ein Abstandselement an den Stromabnehmerköpfen der Stromabnehmerstangen verriegelbar ist.
- Fig.3: illustriert das Eindrahten mit einer in Figur 2 gezeigten Anordnung bei der Fahrt senkrecht unterhalb einem Fahrdraht.
- Fig.4: illustriert das Eindrahten entsprechend Figur 3 bei einem seitlich verschobenen Fahrdraht.
- Fig. 5: zeigt einen Stromabnehmerkopf mit Verriegelung für ein Abstandselement entsprechend dem zweiten Ausführungsbeispiel im Detail.

### Beschreibung der Ausführungsbeispiele

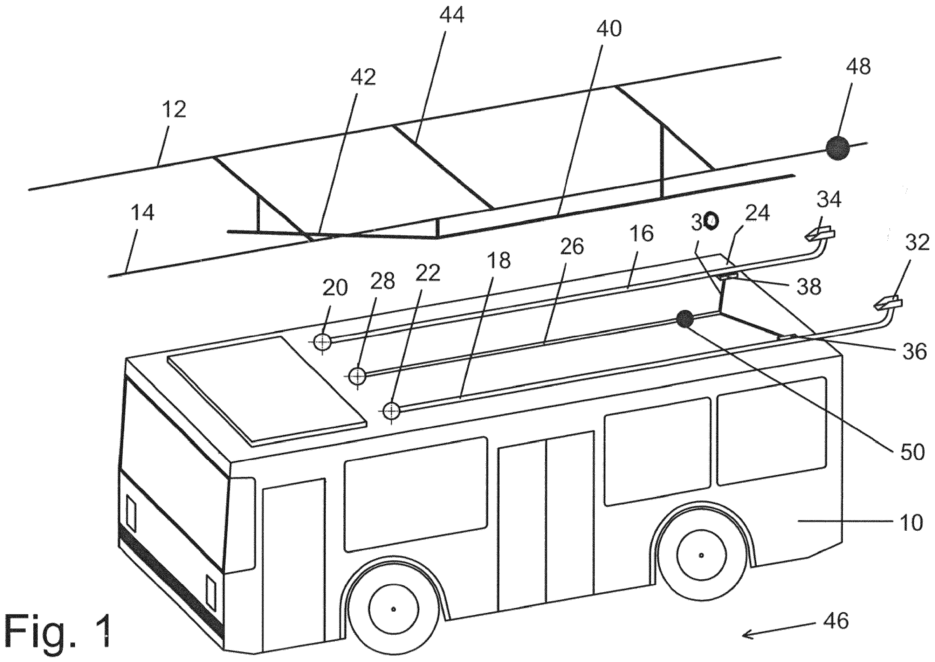

### 1. Ausführungsbeispiel (Fig. 1): Befestigung im stabförmigen Bereich der Stromabnehmerstangen

Figur 1 zeigt ein allgemein mit 10 bezeichnetes Fahrzeug. Die Fahrtrichtung des Fahrzeugs ist in Figur 1 durch einen Pfeil 46 repräsentiert. Im vorliegenden Ausführungsbeispiel ist das Fahrzeug 10 ein Oberleitungsbus. Es versteht sich, dass auch andere Fahrzeuge verwendet werden können, etwa zum Transport von Gütern oder dass kleinere Fahrzeuge mit oder ohne Anhänger vorgesehen sein können. Das Fahrzeug ist nicht schienengebunden. Das Fahrzeug 10 weist einen Elektromotor als Fahrantrieb und einen Akkumulator als Energiespeicher auf. Dabei ist es unschädlich, wenn das Fahrzeug 10 zusätzlich auch einen Verbrennungsmotor oder eine Brennstoffzelle aufweist. Das Fahrzeug 10 weist ferner verschiedene Verbraucher elektrischer Energie auf, wie Heizung, Klimaanlage, Beleuchtung, Türsteuerungen etc.

Oberhalb des Fahrweges verläuft eine Fahrleitung mit zwei Fahrdrähten 12 und 14, auch als Oberleitung bezeichnet. Die Fahrdrähte 12 und 14 verlaufen im Wesentlichen parallel und dienen in einer für Oberleitungsbusse üblichen Weise zur Energieversorgung des Fahrzeugantriebs und der weiteren Verbraucher. Zur Energieübertragung ist eine nachstehend beschriebene Stromabnehmer-Anordnung vorgesehen.

Die Stromabnehmer-Anordnung umfasst zwei stangenförmige Stromabnehmer 16 und 18. Die Stromabnehmer 16 und 18 sind mit Gelenken 20 und 22 an das Dach 24 des Fahrzeugs 10 angelenkt. Auf diese Weise können die Stromabnehmer 16 und 18, beispielsweise mit Stromabnehmerhauptfedern, pneumatisch oder hydraulisch um eine horizontale Achse nach oben verschwenkt werden.

Zwischen den Stromabnehmern 16 und 18 ist ein Verbindungskörper 26 angeordnet. Im vorliegenden Ausführungsbeispiel umfasst das Verbindungskörper 26 eine Stange, die ebenfalls mit einem Gelenk 28 an das Dach 24 des Fahrzeugs 10 angelenkt ist. Die Gelenke 20, 22 und 28 sind um eine vertikale drehbar ausgebildet. Die Gelenke 20, 22 und 28 erlauben somit eine seitliche Verschwenkung der Stromabnehmer 16 und 18. Dies ist insbesondere dann von Vorteil, wenn das Fahrzeug nicht genau unter den Fahrdrähten 12 und 14 bewegt wird.

An den, den Gelenken 20 und 22 abgewandten Enden der stangenförmigen Stromabnehmer sind herkömmliche Stromabnehmerköpfe 32 und 34 befestigt. In den Stromabnehmerköpfen 32, 34 sitzen auswechselbare Gleitschuhe. Derartige Stromabnehmerköpfe sind allgemein bekannt und brauchen hier nicht näher beschrieben werden. Über die Gleitschuhe, die Stromabnehmerköpfe 32 und 34 und die Stromabnehmer wird elektrische Energie während der Fahrt auf die Fahrzeugantriebe und ein Bordnetz oder sonstige Verbraucher übertragen.

An dem dem Gelenk 28 abgewandten Ende des Verbindungskörpers 26 ist ein Abstandselement 30 befestigt. Der Abstandselement 30 ist im vorliegenden Ausführungsbeispiel V-förmig ausgebildet und besteht aus steifem Material. Die Schenkelenden des Abstandselements 30 sind mit Verriegelungen 36 und 38 versehen. Die Verriegelungen können beispielsweise von einem lösbaren Rastmechanismus, Klemmelementen, Bajonettverschlüssen, Haken, Formschlussverbindungen, Magnetverbindern oder dergleichen gebildet sein. Die Verriegelungen wirken mit den Stromabnehmern 16 und 18 bzw. mit daran befestigten Elementen zusammen, so dass eine lösbare Verriegelung herstellbar ist.

Figur 1 zeigt die Stromabnehmer-Anordnung in einer Ruheposition. In dieser Ruheposition liegen die Stromabnehmer 16 und 18, der Verbindungskörper 26 und das Abstandselement 34 auf dem Dach 24 des Fahrzeugs 10 auf. Zur Sicherung gegen unbeabsichtigte oder unautorisierte Bewegungen, insbesondere durch Stromabnehmerhauptfedern, sind die Komponenten der Stromabnehmer-Anordnung in der Ruheposition lösbar verriegelt. Dies erfolgt beispielsweise durch eine Verriegelung 50 in Form von Einrasten in eine am Dach 24 befestigte Halterung.

Das Fahrzeug 10 kann auch auf Strecken ohne Energieversorgung über Fahrdrähte 12 und 14 fahren. Dann wird der Elektroantrieb aus dem Akkumulator mit elektrischer Energie versorgt. Das Fahrzeug 10 erreicht damit auch entferntere Ortschaften und Routen ohne Fahrdraht-Infrastruktur. Wenn das Fahrzeug 10 wieder auf eine Route mit Fahrdrähten gelangt, müssen die Stromabnehmerköpfe 32 und 34 der Routenstromabnehmer 16 und 18 eingedrahtet werden.

Hierzu ist ein in Figur 1 dargestellter Eindrahtbereich vorgesehen. Der Eindrahtbereich umfasst einen Führungsdraht oder eine Führungsstange 40. Die Führung 40 ist an steifen Querstreben 44 zwischen den Fahrdrähten 12 und 14 befestigt. Die Querstreben 44 bilden dabei ein isoliertes Abstandselement, der für einen konstanten Abstand der Fahrdrähte 12 und 14 im Eindrahtbereich sorgt. Die Führung 40 befindet sich mittig in einer Ebene unterhalb der Fahrdrähte 12 und 14. An dem in Fahrtrichtung 46 hinteren Ende 42 - links in Figur 1 - steigt die Führung 40 etwas nach oben an. Bestehende Fahrdraht-Systeme können leicht mit derartigen Führungen 40 nachgerüstet werden, ohne dass die Fahrdrähte geändert werden müssen.

Zum Eindrahten fährt das Fahrzeug 10 in den in Figur 1 gezeigten Eindrahtbereich unterhalb der Fahrdrähte 12 und 14. Ein Sensor 48 in einem der Fahrdrähte 12 oder 14 vor dem Eindrahtbereich erfasst das sich nähernde Fahrzeug 10. Der Sensor 48 überträgt drahtlos ein Sensorsignal an eine Steuerung im Fahrzeug. Die Steuerung wiederum erzeugt ein Steuersignal, welches an einen Aktor an der Verriegelung 50 übertragen wird. Die Signalübertragung kann drahtlos oder über eine Leitung erfolgen.

Wenn die Verriegelung 50 gelöst wird, drücken die (nicht dargestellten) Stromabnehmerhauptfedern der Verbindungskörper 26 mit dem Abstandselement 30 und den daran verriegelten Stromabnehmern 16 und 18 nach oben. Die Stromabnehmerköpfe 32 und 34 werden in Richtung Fahrdraht verschwenkt. Das V-förmig ausgebildete Abstandselement 30 trifft bei der Aufwärtsbewegung zunächst auf die Führung 40. Die Führung 40 bildet eine Eindrahthilfe. Bei der Aufwärtsbewegung wird die Stromabnehmer-Anordnung zentriert. Die Stromabnehmerköpfe 32 und 34 befinden sich genau unter den zugehörigen Fahrdrähten 12 und 14. Wenn das Fahrzeug 10 sich weiterbewegt, erlaubt der geneigte Teil 42 der Führung 40 eine weitere Aufwärtsbewegung der Stromabnehmer 16 und 18, so dass die Stromabnehmerköpfe 32 und 34 in den zugehörigen Fahrdraht eingedrahtet werden.

Nach erfolgreichem Eindrahten, d.h. wenn das Fahrzeug 10 den Eindrahtbereich passiert hat, wird ein Steuersignal zum Entriegeln der Verriegelungen 38 und 36 erzeugt. Das Steuersignal wird an die Verriegelungen 38 und 36 übertragen. Dann wird das Abstandselement 30 von den Stromabnehmern gelöst. Der Verbindungskörper 26 mit dem Abstandselement 30 wird wieder nach unten bewegt und in eine Ruheposition gebracht. Diese Ruheposition kann ebenfalls verriegelt sein. Das eingedrahtete Fahrzeug 10 wird in herkömmlicher Weise über die Fahrdrähte 12 und 14 mit elektrischer Energie versorgt.

Es ist besonders vorteilhaft, dass der Akkumulator während der Fahrzeit über diese Energieversorgung aufgeladen wird. Dadurch werden die Standzeiten, die bei üblichen Elektromobilen zum Aufladen erforderlich sind, vermieden. Die hinreichend langen Fahrzeiten im Bereich der Fahrdrähte machen auch eine batterieschonende Aufladung mit geringen Ladeleistungen möglich.

Bei einer lateral stark versetzten Fahrt des Fahrzeuges 10 zum Eindrahtbereich wird kein Signal vom Sensor 48 übertragen. Dann erfolgt keine Eindrahtung. Ist der Versatz des Fahrzeuges zum Eindrahtbereich gering, dann wird das Abstandselement 30 mittels eines Antriebs von der Steuerung in Richtung der Führung 40 bewegt bis sich das Abstandselement unterhalb der Führung 40 befindet.

Für Fahrzeuge 10 mit einem hohen Strombedarf können zwei Stromabnehmerköpfe 32, 34 direkt hintereinander gesetzt werden. Hierdurch wird die Kontaktfläche wesentlich vergrößert. Mit zwei oder sogar mehr hintereinander angeordneten Stromabnehmerköpfen können größere Leistungen übertragen werden. Bei sehr hohen Stromstärken, etwa im Bergbau, kann auch diese vergrößerte Kontaktfläche noch zu gering sein. Dann können zwischen den Stromschuhen weitere kurze Schleifleistenstücke eingesetzt werden. Diese können beispielsweise quer und fest montiert werden. Nur die Höhenlage der Schleifkohle muss mit der Höhenlage der Schleifkohle in den Stromschuhen übereinstimmen. Die Stromschuhe sind vorne und hinten drehbar gelagert. Die Schleifleistenstücke dazwischen sind sehr kurz. Dadurch wird erreicht, dass auch auf Bogenabschnitten der Fahrdraht auf den Schleifleistenstücken aufliegt. Kurze Schleifleistenstücke haben nur ein geringes Gewicht. Eine vertikale Federung bewirkt, dass die Schleifleistenstücke immer gegen den Fahrdraht drücken.

Am Ende der Fahrleitung oder aus einem anderen Grund können die Stromabnehmerköpfe 32 und 34 ebenfalls während der Fahrt von den Fahrdrähten 12 und 14 abgezogen werden. Hierzu wird die Fahrdrahthöhe vergrößert. Bei einer ausgewählten Fahrdrahthöhe wird der bekannte Abziehmechanismus aktiviert. Die Stromabnehmer 16 und 18 werden nach unten zum Fahrzeug 10 gezogen, wodurch die Stromabnehmer in der Ruheposition in eine Führung am Fahrzeug 10 eingleiten und dabei wieder mit dem Abstandselement 33 verriegelt werden.

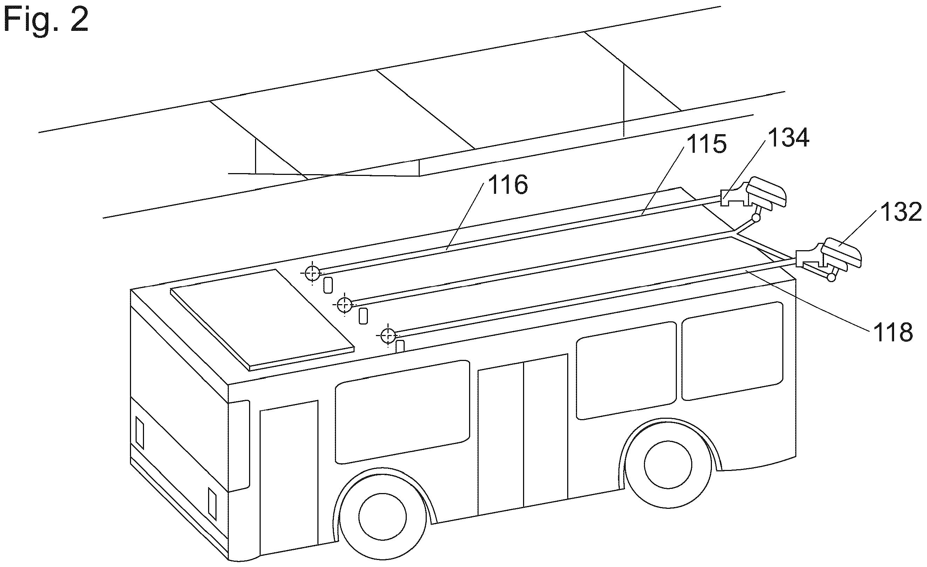

### 2. Ausführungsbeispiel (Fig.2-5): Befestigung am Stromabnehmerkopf der Stromabnehmerstangen

Figuren 2 bis 5 illustrieren ein alternatives Ausführungsbeispiel. Anders als bei dem in Figur 1 erläuterten Ausführungsbeispiel ist das Abstandselement nicht im stabförmigen Bereich 115 der Stromabnehmerstangen 116, 118, sondern an deren Stromabnehmerköpfen 132, 134 verriegelt. Das Verbindungskörper 126 ist entsprechend etwas länger. Im Übrigen entspricht die Anordnung des zweiten Ausführungsbeispiels der Anordnung des ersten Ausführungsbeispiels und muss hier nicht näher erläutert werden.

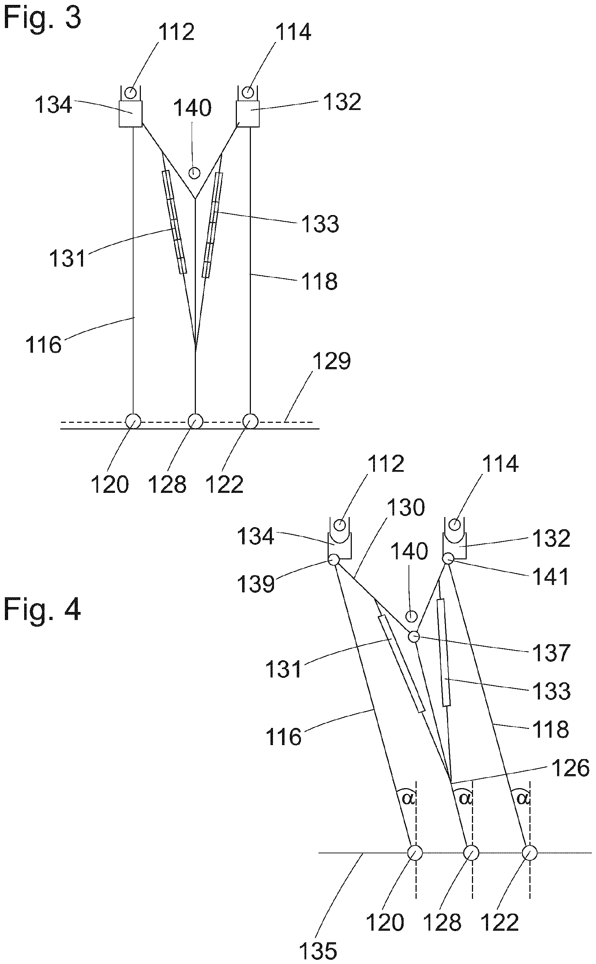

Figur 3 und 4 illustrieren die Vorteile einer gelenkigen Ausgestaltung der Komponenten. Wie im ersten Ausführungsbeispiel sind die Stromabnehmerstangen 116 und 118, sowie das Verbindungskörper 126 mit Gelenken 120, 122 und 128 versehen. Die Gelenke 120, 122 und 128 erlauben eine erste Rotation um eine horizontale Achse 129, die in Figur 3 zu erkennen ist. Diese Rotation dient zum Auf- und Abbewegen der Stromabnehmerstangen 116 und 118, sowie des Verbindungskörpers 126, wenn die Stromabnehmerstangen eingedrahtet oder vom Fahrdraht entfernt werden.

Zum Eindrahten an einem seitlich versetzten Fahrdraht erlauben die Gelenke 120, 122 und 128 ferner eine Rotation um eine horizontale Achse, die parallel zur Fahrtrichtung verläuft. Ein durch diese Rotation erzeugter Winkelversatz α ist in Figur 4 illustriert. Die Stromabnehmerstangen und das Verbindungskörper 126 sind nach links in Figur 4 geneigt. Es versteht sich, dass auch eine Neigung in der entgegengesetzten Richtung möglich ist. Eine solche Neigung kann erforderlich sein, wenn sich der Eindrahtbereich nicht genau oberhalb des Fahrzeugs, sondern seitlich versetzt befindet.

Die Neigung der Stromabnehmerstangen 120 und 122, sowie des Verbindungskörpers 128 erfolgt im vorliegenden Ausführungsbeispiel mittels pneumatischer Kolben 131 und 133. Das untere Ende der pneumatischen Kolben 131 und 133 ist am Verbindungskörper 126 befestigt. Das obere Ende der pneumatischen Kolben 131 und 133 ist am Abstandselement 130 befestigt. Für eine Neigung nach links, wie sie beispielhaft in Figur 4 dargestellt ist, wird der in Figur 4 linke Kolben 131 komprimiert und der in Figur 4 rechte Kolben 133 expandiert. Durch diese Betätigung wird das Abstandselement 130 nach links bewegt.

Die Bewegung des Abstandselements 130 erfordert nicht nur eine gelenkige Verbindung am unteren Ende des Verbindungskörpers 126 am Gelenk 128 mit der Fahrzeugoberfläche 135. Auch das obere Ende des Verbindungskörpers 126 muss über eine gelenkige Verbindung 137 mit dem Abstandselement 130 verbunden sein. Damit die Stromabnehmerköpfe 134 und 132 bei einem seitlichen Versatz auf die gleiche Höhe gebracht werden können, wie ohne seitlichen Versatz, ist ferner der Verbindungskörper beispielsweise teleskopartig verlängerbar oder an einem oder beiden Ende in Längsrichtung verschieblich ausgebildet. Dadurch können Längenunterschiede ausgeglichen werden, die sich aus der veränderten Geometrie ergeben.

Das Eindrahten an seitlich versetzten Fahrdrähten 112 und 114 mittels einer Führung 140 als Eindrahthilfe erfolgt auf gleiche Weise wie beim ersten Ausführungsbeispiel. Bei Neigung der Stromabnehmeranordnung würde die V-förmige Öffnung des Abstandselements 130 eine etwas andere Richtung einnehmen und die Stromabnehmerköpfe 132 und 134 wären ebenfalls leicht geneigt. Diese Neigung kann durch eine gelenkige Verbindung 139, 141 der Stromabnehmerköpfe 132 und 134 mit dem Abstandselement kompensiert werden. Die Schleifschuhe sind dann auch bei seitlichem Versatz gut in Richtung der Fahrdrähte 112 und 114 ausgerichtet. Durch den Verbund der Stromabnehmerstangen 116, 118 mit dem Abstandselement 130 und dem Verbindungskörper 126 wird eine stabile Anordnung erreicht, die während der Eindrahtphase wenig schaukelt und gut einzudrahten ist.

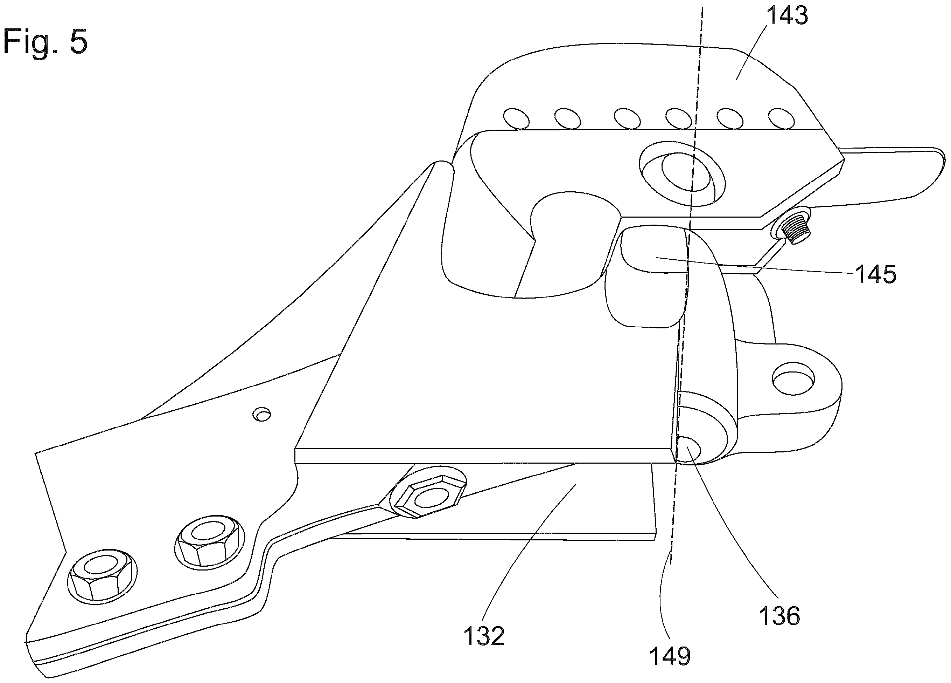

Figur 5 zeigt ein Beispiel für einen Stromabnehmerkopf 132. Der Schleifschuh 143 ist in ein Gelenk 145 an den übrigen Körper 147 des Stromabnehmerkopfs 132 angelenkt. Der Schleifschuh 143 ist somit um eine Drehachse 149 drehbar gelagert. Die Verriegelung ist über eine Welle fest mit dem Schleifschuh 143 verbunden. Eine Drehung der Verriegelung 136 führt zu einer Drehung und somit zur Ausrichtung des Schleifschuhs. Als Verriegelung kann auch hier jede Art der Verriegelung verwendet werden, etwa eine mechanische oder magnetische Verriegelung.

Nach erfolgreichem Eindrahten kann durch die Schleifschuhe eine Spannung erfasst werden. Dann werden die Verriegelungen gelöst und das Abstandselement mit dem Verbindungskörper zurück nach unten auf das Dach des Fahrzeugs bewegt. Dort kann es mittels einer weiteren Verriegelung fixiert werden.

Wenn das Fahrzeug keinen Strom aus dem Fahrdraht bezieht, werden auch die beiden Stromabnehmerstangen am Dach verriegelt. Gleichzeitig wird das Abstandselement an den Stromabnehmerköpfen verriegelt. Auf diese Weise ist die Anordnung für das nächste Eindrahten vorbereitet.

Durch ein von außen auf das Fahrzeug übertragenes Signal kann die nächste Eindrahtung vorbereitet werden. An einem Mast ist ein Koppler und im Fahrzeug ein Sender-Empfänger vorgesehen.

Die oben erläuterten Ausführungsbeispiele dienen der Illustration der in den Ansprüchen beanspruchten Erfindung. Merkmale, welche gemeinsam mit anderen Merkmalen offenbart sind, können in der Regel auch alleine oder in Kombination mit anderen Merkmalen, die im Text oder in den Zeichnungen explizit oder implizit in den Ausführungsbeispielen offenbart sind, verwendet werden. Maße und Größen sind nur beispielhaft angegeben. Dem Fachmann ergeben sich geeignete Bereiche aus seinem Fachwissen und brauchen hier daher nicht näher erläutert werden. Die Offenbarung einer konkreten Ausgestaltung eines Merkmals bedeutet nicht, dass die Erfindung auf diese konkrete Ausgestaltung beschränkt werden soll. Vielmehr kann ein solches Merkmal durch eine Vielzahl anderer, dem Fachmann geläufigen Ausgestaltungen verwirklicht werden. Die Erfindung kann daher nicht nur in Form der erläuterten Ausgestaltungen verwirklicht werden, sondern durch alle Ausgestaltungen, welche vom Schutzbereich der beigefügten Ansprüche abgedeckt sind.

Es versteht sich, dass unter dem Begriff "V-förmig" alle Formen gemeint sind, bei denen die Führung das Abstandselement zentriert. Entsprechend fallen auch leicht gekrümmte Schenkel des "V" unter diese Definition. Je nach Lage des Fahrdrahtes können auch ungleich lange Schenkel am Abstandselement vorgesehen sein, wenn die Führung 40 nicht genau mittig zu den Fahrdrähten verläuft.

Die Begriffe "oben", "unten", "rechts" und "links" beziehen sich ausschließlich auf die beigefügten Zeichnungen. Es versteht sich, dass beanspruchte Vorrichtungen auch eine andere Orientierung annehmen können. Der Begriff "enthaltend" und der Begriff "umfassend" bedeuten, dass weitere, nicht-genannte Komponenten vorgesehen sein können. Unter dem Begriff "im Wesentlichen", "vorwiegend" und "überwiegend" fallen alle Merkmale, die eine Eigenschaft oder einen Gehalt mehrheitlich, d.h. mehr als alle anderen genannten Komponenten oder Eigenschaften des Merkmals aufweisen, also bei zwei Komponenten beispielsweise mehr als 50%.

## Patentansprüche

1. Ein zentrierendes, steifes Abstandselement (30) für eine Stromabnehmer-Anordnung für doppelpolige Fahrdrähte (12, 14) von fahrdrahtgespeisten Fahrzeugen (10), die auch unabhängig vom Fahrdrahtsystem fahren können, enthaltend
(a) zwei Schenkel, die an den Innenseiten Gleitflächen besitzen, die zu einer nach oben offenen Führungsrille verlaufen, in welche eine Führung (40) während des Fahrbetriebs einfädelbar ist,
**gekennzeichnet durch**
(b) eine Verriegelung (36, 38) zum Befestigen des Abstandselements (30) an zwei Stromabnehmerstangen (16, 18), und
(c) eine Steuerung zum Steuern der Verriegelung (36, 38), derart, dass das Abstandselement (30) an beiden Stromabnehmerstangen (16, 18) zum Eindrahten befestigt und nach dem Eindrahten von wenigstens einer Stromabnehmerstange gelöst ist.

2. Stromabnehmer-Anordnung für doppelpolige Fahrdrähte (12, 14) von fahrdrahtgespeisten Fahrzeugen (10), die auch unabhängig vom Fahrdrahtsystem fahren können, enthaltend
(a) ein Abstandselement (30) mit den Merkmalen des Anspruchs 1, und
(b) zwei gelenkig an einem Fahrzeug (10) befestigbare Stromabnehmerstangen (16, 18).

3. Stromabnehmer-Anordnung nach Anspruch 2, **dadurch gekennzeichnet, dass** jede der Stromabnehmerstangen einen Stromabnehmerkopf umfasst, an welchem das Abstandselement befestigbar ist.

4. Stromabnehmer-Anordnung nach Anspruch 3, **dadurch gekennzeichnet, dass** der Stromabnehmerkopf ein Gelenk aufweist, welche eine Rotation des Abstandselements gegenüber dem Stromabnehmerkopf um eine Achse erlaubt, die im eingedrahteten Zustand senkrecht verläuft.

5. Stromabnehmer-Anordnung nach einem der vorgehenden Ansprüche 2 bis 4, **dadurch gekennzeichnet, dass** das Abstandselement (30) über einen Verbindungskörper (26) mit dem Fahrzeug (10) verbunden ist.

6. Stromabnehmer-Anordnung nach Anspruch 5, **dadurch gekennzeichnet, dass** der Verbindungskörper von einer Stange (26) gebildet ist, welche gelenkig mit dem Fahrzeug (10) verbindbar ist.

7. Stromabnehmer-Anordnung nach Anspruch 5 oder 6, **dadurch gekennzeichnet, dass** die Verbindung des Verbindungskörpers (26) mit dem Fahrzeug (10) quer zur Längsrichtung des Fahrdrahtes (12, 14) verstellbar oder um eine vertikale Achse drehbar ausgebildet ist.

8. Stromabnehmer-Anordnung nach einem der vorgehenden Ansprüche 2 bis 7, **gekennzeichnet durch** einen Antrieb zum Bewegen des Abstandselements (30) relativ zum Fahrzeug (10).

9. Stromabnehmer-Anordnung nach einem der vorgehenden Ansprüche 2 bis 8, **gekennzeichnet durch** einen Sensor (48) zum Erfassen eines Eindrahtbereichs oder eines Fahrzeugs (10) im Eindrahtbereich.

10. Stromabnehmer-Anordnung nach Anspruch 9, **gekennzeichnet durch** einen Signalgeber zum Anzeigen eines Eindrahtbereichs.

11. Stromabnehmer-Anordnung nach einem der vorgehenden Ansprüche 2 bis 10, **dadurch gekennzeichnet, dass** das Abstandselement (30) von einer Eindrahtposition in eine Ruheposition bewegbar ist und Verriegelungsmittel zum Verriegeln des Abstandselements (30) in der Ruheposition vorgesehen sind.

12. Stromabnehmer-Anordnung nach einem der vorgehenden Ansprüche 2 bis 11, **dadurch gekennzeichnet, dass** jede Stromabnehmerstange (12, 14) zwei Schleifstückhalterungen (30, 32) aufweist, welche in Längsrichtung des Fahrdrahtes (12, 14) hintereinander angeordnet sind.

13. Stromabnehmer-Anordnung nach einem der vorgehenden Ansprüche 2 bis 12, **dadurch gekennzeichnet, dass** die Steuerung vom Fahrzeugführer oder von der Fahrzeugführerin betätigbar ist oder von den Signalen eines Sensors beaufschlagt ist, welcher einen Eindrahtbereich erfasst.

14. Elektrisch angetriebenes fahrdrahtgespeistes Fahrzeug (10) das auch unabhängig vom Fahrdrahtsystem (12, 14) fahren kann und einen Speicher für elektrische Energie enthält,
**gekennzeichnet durch** eine Stromabnehmer-Anordnung für doppelpolige Fahrdrähte nach einem der vorgehenden Ansprüche 2 bis 13.

15. Beförderungssystem zur Beförderung von Personen und/oder Gütern entlang wenigstens eines Beförderungsweges; umfassend ein Fahrdrahtsystem, welches sich zumindest über eine Teilstrecke des Beförderungsweges erstreckt, mit zwei Fahrdrähten (12, 14) und einem Eindrahtbereich mit einer sich in Beförderungsrichtung erstreckenden, draht- oder stangengenförmigen Führung (40)
**gekennzeichnet dadurch** das es weiterhin ein elektrisch angetriebenes fahrdrahtgespeistes Fahrzeug (10) nach Anspruch 14 umfasst.

## Claims

1. A centering, stiff distance element (30) for a current collector assembly for double pole contact wires (12, 14) of contact wire fed vehicles (10) which can move indepentently of the contact wire system also, comprising
(a) two legs having sliding surfaces at their inner sides which extend towards an upwardly opening guide groove into which a guide (40) can be threaded;
**characterized by**
(b) a locking (36, 38) for fixing the distance element (30) to two current collector poles (16, 18), and
(c) a control for controlling the locking (36, 38) in such a way that the distance element (30) is fixed to the two current collector poles (16, 18) for wiring-in and released from at least one current collector pole after the wiring-in.

2. Current collector assembly for double pole contact wires (12, 14) of contact wire fed vehicles (10) which can move indepentently of the contact wire system also, comprising
(a) a distance element (30) with the features of claim 1, and
(b) two current collector poles (16, 18) configured to be hinged to a vehicle (10).

3. Current collector assembly according to claim 2, **characterized in that** each of the current collector poles comprises a current collector head configured to have the distance element attached thereto.

4. Current collector assembly according to claim 3, **characterized in that** the current collector head comprises a joint which allows a rotation of the distance element relative to the current collector head about an axis which in a wired-in state extends in a vertical direction.

5. Current collector assembly according to any of the preceding claims 2 to 4, **characterized in that** the distance element (30) is connected to the vehicle (10) by a connection body (26).

6. Current collector assembly according to claim 5, **characterized in that** the connection body is formed by a pole (26) which is configured to be hinged to the vehicle (10).

7. Current collector assembly according to claim 5 or 6, **characterized in that** the connection of the connection body (26) to the vehicle (10) is adjustable laterally to the longitudinal direction of the contact wire (12, 14) or configured to be rotated about a vertical axis.

8. Current collector assembly according to any of the preceding claims 2 to 7, **characterized by** an actuator for driving the distance element (30) relative to the vehicle (10).

9. Current collector assembly according to any of the preceding claims 2 to 8, **characterized by** a sensor (48) for sensing the wiring-in range or a vehicle (10) in the wiring-in range.

10. Current collector assembly according to claim 9, **characterized by** a signal generator for indicating the wiring-in range.

11. Current collector assembly according to any of the preceding claims 2 to 10, **characterized in that** the distance element (30) is configured to be moved from a wiring-in position into a resting position and locking means are provided for locking the distance element (30) in the resting position.

12. Current collector assembly according to any of the preceding claims 2 to 11, **characterized in that** each current collector pole (12, 14) has two abrasive piece holders, which are positioned in series along the longitudinal direction of the contact wire.

13. Current collector assembly according to any of the preceding claims 2 to 12, **characterized in that** the control is operated by the vehicle operator or fed with signals from a sensor which detects the wiring-in range.

14. Electrically driven, contact wire fed vehicle (10) which can move indepentently of the contact wire system also, and which comprises a storage for electric energy, **characterized by** current collector assembly for double pole contact wires according to any of the preceding claims 2 to 13.

15. Transport system for transporting persons and/or goods along at least one transport path; comprising a contact wire system extending at least along a portion of the transport path, said transport system comprising two contact wires (12, 14) and a wiring-in range having a wire- or bar-shaped guide (40) **characterized in that** it further comprises a vehicle (10) according to claim 14.

## Revendications

1. Écarteur de centrage rigide (30) pour une disposition de pantographe pour fils de contact bipolaires (12, 14) de véhicules (10) alimentés par fils de contact qui peuvent également marcher indépendamment du système de fils de contact, comprenant
(a) deux branches qui possèdent sur les faces intérieures des surfaces de glissement qui s'étendent jusqu'à une rainure de guidage ouverte vers le haut dans laquelle un dispositif de guidage (40) peut s'insérer pendant la marche du véhicule,
**caractérisé par**
(b) un dispositif de verrouillage (36, 38) destiné à fixer l'écarteur (30) à deux barres de pantographe (16, 18), et
(c) un dispositif de commande destiné à commander le dispositif de verrouillage (36, 38) de sorte que l'écarteur (30) est fixé aux deux barres de pantographe (16, 18) en vue de la montée et qu'après la montée il se détache d'au moins une barre de pantographe.

2. Disposition de pantographe pour fils de contact bipolaires (12, 14) de véhicules (10) alimentés par fils de contact qui peuvent également marcher indépendamment du système de fils de contact, comprenant
(a) un écarteur (30) présentant les caractéristiques de la revendication 1, et
(b) deux barres de pantographes (16, 18) pouvant se fixer sur un véhicule (10) de manière articulée.

3. Disposition de pantographe selon la revendication 2, **caractérisée en ce que** chacune des barres de pantographe comprend une tête de pantographe à laquelle peut se fixer l'écarteur.

4. Disposition de pantographe selon la revendication 3, **caractérisée en ce que** la tête de pantographe présente une articulation qui permet une rotation de l'écarteur par rapport à la tête de pantographe autour d'un axe qui s'étend verticalement une fois la montée effectuée.

5. Disposition de pantographe selon l'une quelconque des revendications précédentes 2 à 4, **caractérisée en ce que** l'écarteur (30) est assemblé au véhicule (10) par l'intermédiaire d'un corps d'assemblage (26).

6. Disposition de pantographe selon la revendication 5, **caractérisée en ce que** le corps d'assemblage est formé d'une barre (26) qui peut s'assembler au véhicule (10) de manière articulée.

7. Disposition de pantographe selon la revendication 5 ou 6, **caractérisée en ce que** l'assemblage du corps d'assemblage (26) au véhicule (10) peut se régler diagonalement par rapport au sens longitudinal du fil de contact (12, 14) ou est configuré de sorte à pouvoir tourner autour d'un axe vertical.

8. Disposition de pantographe selon l'une quelconque des revendications précédentes 2 à 7, **caractérisée par** un dispositif d'entraînement destiné à déplacer l'écarteur (30) par rapport au véhicule (10).

9. Disposition de pantographe selon l'une quelconque des revendications précédentes 2 à 8, **caractérisée par** un capteur (48) destiné à saisir une zone de montée ou un véhicule (10) situé dans la zone de montée.

10. Disposition de pantographe selon la revendication 9, **caractérisée par** un transmetteur de signaux destiné à afficher la zone de montée.

11. Disposition de pantographe selon l'une quelconque des revendications précédentes 2 à 10, **caractérisée en ce que** l'écarteur (30) peut se déplacer d'une position de montée dans une position de repos et qu'il est prévu des moyens de verrouillage destinés à verrouiller l'écarteur (30) en position de repos.

12. Disposition de pantographe selon l'une quelconque des revendications précédentes 2 à 11, **caractérisée en ce que** chaque barre de pantographe (12, 14) présente deux fixations de pièce de frottement (30, 32) qui sont disposées l'une derrière l'autre dans le sens longitudinal du fil de contact (12, 14).

13. Disposition de pantographe selon l'une quelconque des revendications précédentes 2 à 12, **caractérisée en ce que** le dispositif de commande peut être actionné par le conducteur ou la conductrice du véhicule ou les signaux d'un capteur saisissant une zone de montée lui sont appliqués.

14. Véhicule (10) à actionnement électrique, alimenté par fils de contact, qui peut également marcher indépendamment du système de fils de contact (12, 14) et comprend un accumulateur d'énergie électrique, **caractérisé par** une disposition de pantographe pour fils de contact bipolaires selon l'une quelconque des revendications précédentes 2 à 13.

15. Système de transport pour le transport de personnes et/ou de marchandises le long d'au moins un trajet de transport ; comprenant un système de fils de contact s'étendant au moins sur un tronçon du trajet de transport et présentant deux fils de contact (12, 14) et une zone de montée munie d'un dispositif de guidage (40) en forme de fil ou de barre s'étendant dans le sens de transport, **caractérisé en ce qu'**il comprend en outre selon la revendication 14 un véhicule (10) à actionnement électrique, alimenté par fils de contact.
